# EUROPÄISCHE PATENTSCHRIFT

(11) **EP 2 905 188 B1**
(45) Veröffentlichungstag und Bekanntmachung des Hinweises auf die Patenterteilung: **16.10.2019**
(21) Anmeldenummer: 15000209.5
(22) Anmeldetag: 24.01.2015
(51) Int. Cl.: B60T 7/20, B60T 8/17, B60Q 1/44, B60W 30/09

(54) **Verfahren zum Beeinflussen einer Steuerung eines Motorwagens**
Method for influencing a controller of a motor vehicle
Procédé destiné à influencer une commande d'une voiture automobile

(30) Priorität: 06.02.2014 DE 102014001593
(43) Veröffentlichungstag der Anmeldung: 12.08.2015
(73) Patentinhaber: WABCO GmbH, 30453 Hannover (DE)
(72) Erfinder: Barlsen, Holger, 30851 Langenhagen (DE); Stender, Axel, 31787 Hameln (DE); Treichel, Thomas, 10247 Berlin (DE); Witte, Norbert, 31867 Lauenau (DE); Wolf, Markus, 31137 Hildesheim (DE)
(74) Vertreter: Koschnitzki, Thomas

(56) Entgegenhaltungen:
- EP-A1- 2 641 790
- WO-A1-2004/055611
- DE-A1-102008 054 366

## Beschreibung

Die Erfindung betrifft ein Verfahren zum Beeinflussen einer Steuerung eines Motorwagens mit Antriebsmotor und mindestens einem Anhängefahrzeug, wobei das Anhängefahrzeug ein elektronisches Bremssystem mit Rückraumüberwachung aufweist, bei rückwärts gerichteter Annäherung an ein Hindernis Bremsen des Anhängefahrzeugs betätigen kann und an den Motorwagen eine Aufforderung zur Betätigung von Bremslichtern übersenden kann. Außerdem betrifft die Erfindung ein Steuergerät für einen Motor eines Motorwagens.

Anhängefahrzeuge mit elektronischem Bremssystem können mit einer Rückraumüberwachung ausgestattet sein, welche bei Rückwärtsfahrt eine Annäherung an ein Hindernis erkennt, z. B. die Annäherung an eine Laderampe. Das elektronische Bremssystem bremst dann das Anhängefahrzeug. Die Rückraumüberwachung kann auch als elektronische Rückfahrhilfe oder Annäherungsassistenzsystem bezeichnet werden.

Anhängefahrzeug und Zugfahrzeug hierfür, nämlich ein Motorwagen, tauschen Statusinformationen und andere Informationen über eine Datenverbindung aus. In Deutschland und in anderen europäischen Ländern ist hierfür das CAN-Bussystem vorgesehen, in Nordamerika die Powerline-Datenverbindung. Andere Arten von Datenverbindungen sind ebenfalls möglich oder in der Entwicklung.

Sofern das elektronische Bremssystem des Anhängefahrzeugs selbsttätig bremst, z. B. aufgrund der Rückraumüberwachung, ist gesetzlich vorgesehen, dass über die Datenverbindung vom Anhängefahrzeug zum Motorwagen eine Aufforderung zur Betätigung von Bremslichtern übermittelt wird. Daraufhin werden von einem Steuergerät im Motorwagen die Bremslichter des Motorwagens und des Anhängefahrzeugs angesteuert. Die Aufforderung zur Betätigung von Bremslichtern wird beispielsweise als standardisierte CAN-Botschaft übermittelt.

Die Rückraumüberwachung des Anhängefahrzeugs ist aktiv, sobald am Motorwagen ein Rückwärtsgang eingelegt ist. Ein Steuergerät für das elektronische Bremssystem im Anhängefahrzeug tastet mittelbar den elektrischen Zustand von Rückfahrscheinwerfern bzw. die anliegende Spannung ab und kann in Abhängigkeit davon die Rückraumüberwachung aktivieren. Bei aktivierter Rückraumüberwachung wird dies dem Motorwagen wiederum über die Datenverbindung mitgeteilt. Im CAN-Bussystem ist hierfür eine standardisierte CAN-Botschaft vorgesehen.

Bei Rückwärtsfahrt erkennt die Rückraumüberwachung ein Hindernis, das elektronische Bremssystem des Anhängefahrzeugs bremst letzteres und der Motorwagen versucht das Anhängefahrzeug weiterzuschieben. Der Motor des Motorwagens arbeitet gegen die Bremsen des Anhängefahrzeugs. Es kommt zu Verspannungen im Anhängefahrzeug und Motorwagen. Bremsen und Reifen des Anhängefahrzeugs nutzen schneller ab als üblich.

Aufgabe der Erfindung ist die Schaffung eines Verfahrens, mit dem die beschriebenen Nachteile vermieden oder vermindert werden können.

Das erfindungsgemäße Verfahren weist die Merkmale des Anspruchs 1 auf. Wenn die Rückraumüberwachung des Anhängefahrzeugs aktiv ist und das Anhängefahrzeug gebremst wird oder eine Aufforderung zur Betätigung der Bremslichter an den Motorwagen sendet, reduziert die Steuerung des Motorwagens ein Drehmoment eines Antriebsmotors. Die vorliegenden Informationen über die Rückraumüberwachung und die Betätigung der Bremsen des Anhängefahrzeugs werden ausgewertet und genutzt, um das Drehmoment des Antriebsmotors zu reduzieren. Je stärker das Drehmoment reduziert wird, umso geringer sind die auftretenden Verspannungen und die Belastungen für Bremsen und Reifen des Anhängefahrzeugs.

Vorteilhafterweise wird die Steuerung des Motorwagens von einem Motorsteuergerät ausgeführt, welches Daten empfängt, aus denen die Aktivität der Rückraumüberwachung des Anhängefahrzeugs und die Aufforderung zur Betätigung der Bremslichter erkennbar ist. Das Motorsteuergerät ist ebenfalls an die Datenverbindung, insbesondere an das CAN-Bussystem angeschlossen, empfängt entsprechende Daten, wertet diese aus und reduziert auf dieser Grundlage das Drehmoment des Antriebsmotors. Beispielsweise regelt das Motorsteuergerät Zeitpunkt und Menge von in den Antriebsmotor eingespritztem Kraftstoff. Sofern als Antriebsmotor ein Elektromotor vorgesehen ist, kann eine Spannungs- oder Stromregelung erfolgen.

Gegenstand der Erfindung ist auch ein Steuergerät für einen Antriebsmotor eines Motorwagens, mit einer Datenverbindung zum Empfang von Daten, welche zumindest den Status einer Rückraumüberwachung und eine Betätigung von Bremsen betreffen. Das erfindungsgemäße Steuergerät weist die Merkmale des Anspruchs 3 auf. Das Steuergerät reduziert das Drehmoment des Antriebsmotors, wenn Daten empfangen werden, aus denen sich ergibt, dass die Rückraumüberwachung aktiv ist und dass gebremst wird oder Bremslichter betätigt werden sollen.

Verfahren und Steuergerät sind in erster Linie bezogen auf einen Lastzug aus Motorwagen und Anhängefahrzeug. Möglich ist aber auch die Anwendung im Zusammenhang mit einem Lastzug mit mehr als einem Anhängefahrzeug. Es agieren dann zumindest der Motorwagen und das letzte Anhängefahrzeug miteinander.

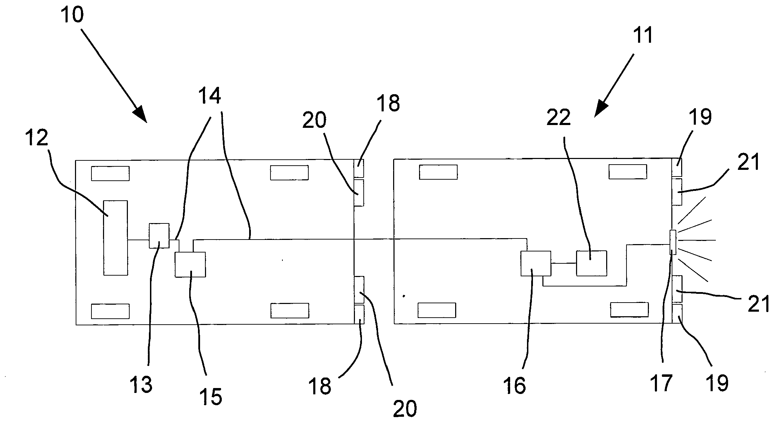

Weitere Merkmale der Erfindung ergeben sich aus der Beschreibung im Übrigen und aus den Ansprüchen. Vorteilhafte Ausführungsformen der Erfindung werden nachfolgend anhand der einzigen Figur erläutert. Diese zeigt eine schematische Darstellung eines Lastzugs aus Motorwagen 10 und Anhängefahrzeug 11. Nicht eingezeichnet sind Bremsleitungen, Starkstromverbindungen und eine mechanische Verbindung zwischen Motorwagen und Anhängefahrzeug. Im Wesentlichen sind nur Datenverbindungen und einige elektrische Leitungen zum Ansteuern gezeigt.

Im Motorwagen 10 wird ein Antriebsmotor 12 von einem Motorsteuergerät 13 angesteuert. Letzteres ist über ein CAN-Bussystem 14 mit einem Bremsensteuergerät 15 des Motorwagens 10 und einem Bremsensteuergerät 16 des Anhängefahrzeugs 11 verbunden. Im Bremsensteuergerät 16 des Anhängefahrzeugs 11 ist ein Rückraumüberwachungssystem implementiert, welches Daten von einem Rückraumsensor 17 erhält und verarbeitet. Bei rückwärts gerichteter Annäherung an ein Hindernis betätigt das Bremsensteuergerät 16 nicht gezeigte Bremsen des Anhängefahrzeugs 11. Zugleich sendet das Bremsensteuergerät 16 über das CAN-Bussystem 14 eine CAN-Botschaft mit einer Aufforderung zur Betätigung von Bremslichtern 18, 19. Das Bremsensteuergerät 15 des Motorwagens erhält diese Aufforderung und löst die Betätigung von Bremslichtern 18, 19 von Motorwagen 10 und Anhängefahrzeug 11 aus. Die Aufforderung zur Betätigung der Bremslichter 18, 19 gelangt dabei auch zum Motorsteuergerät 13.

Das Rückraumüberwachungssystem (auch als Annäherungsassistenzsystem bezeichnet) im Steuergerät 16 wird mittelbar bei Einlegen eines Rückwärtsgangs im Motorwagen 10 aktiviert. Durch das Einlegen des Rückwärtsgangs werden Rückfahrscheinwerfer 20, 21 eingeschaltet. Dabei liegt an den Rückfahrscheinwerfern 20, 21 eine Betriebsspannung an. Diese wird von einer mit dem Bremsensteuergerät 16 des Anhängefahrzeugs verbundenen Sensoreinrichtung 22 detektiert. Sofern die Rückfahrscheinwerfer 21 aktiviert sind, erhält das Bremsensteuergerät 16 diese Information und schaltet das Rückraumüberwachungssystem ein. Der Rückraumsensor 17 ist dann aktiv. Zugleich wird die Information des aktiven Rückraumüberwachungssystems als CAN-Botschaft über das CAN-Bussystem übermittelt.

In der Praxis sind die genannten Informationen in einer (gemeinsamen) CAN-Botschaft enthalten. Es handelt sich zum einen um die Botschaft EBS 22, Byte 4, Bits 1 - 2 (Status eines Annäherungsassistenzsystems). Haben die genannten Bits den Wert "01" ist das Annäherungsassistenzsystem aktiv. Die Aufforderung zur Betätigung von Bremslichtern ist Bestandteil der Botschaft EBS 22, Byte 4, Bits 5 - 6. Die Aufforderung liegt vor, wenn die genannten Bits den Wert "01" haben.

Wenn nun das Motorsteuergerät 13 die genannte CAN-Botschaft auswertet und für die genannten Bits jeweils der Wert "01" vorliegt, wird von einem Bremsvorgang bei der rückwärtigen Annäherung an ein Hindernis ausgegangen und das Drehmoment des Antriebsmotors 12 reduziert. Vorzugsweise erfolgt die Reduktion des Drehmoments nur, solange eine Leerlaufdrehzahl des Antriebsmotors 12 nicht unterschritten wird.

## Patentansprüche

1. Verfahren zum Beeinflussen einer Steuerung eines Motorwagens (10) mit Antriebsmotor (12) und mindestens einem Anhängefahrzeug (11), wobei das Anhängefahrzeug (11) ein elektronisches Bremssystem mit Rückraumüberwachung aufweist, wobei ein Bremsensteuergerät (16) des Anhängefahrzeugs (11) bei rückwärts gerichteter Annäherung an ein Hindernis Bremsen des Anhängefahrzeugs (11) betätigen kann und an den Motorwagen (10) eine Aufforderung zur Betätigung von Bremslichtern (18, 19) übersenden kann, **dadurch gekennzeichnet, dass** die Steuerung des Motorwagens (10) ein Drehmoment des Antriebsmotors (12) reduziert, wenn die Rückraumüberwachung des Anhängefahrzeugs (11) aktiv ist und das Anhängefahrzeug (11) gebremst wird oder eine Aufforderung zur Betätigung der Bremslichter (18, 19) an den Motorwagen (10) sendet.

2. Verfahren nach Anspruch 1, **dadurch gekennzeichnet, dass** die Steuerung des Motorwagens von einem Motorsteuergerät (13) ausgeführt wird, welches Daten empfängt, aus denen die Aktivität der Rückraumüberwachung des Anhängefahrzeugs (11) und die Aufforderung zur Betätigung der Bremslichter (18, 19) erkennbar ist.

3. Motorsteuergerät (13) für einen Antriebsmotor (12) eines Motorwagens (10), mit einer Datenverbindung zum Empfang von Daten, welche zumindest den Status einer Rückraumüberwachung und eine Betätigung von Bremsen betreffen, insbesondere zur Durchführung des Verfahrens nach einem der vorhergehenden Ansprüche, **dadurch gekennzeichnet, dass** das Motorsteuergerät (13) ein Drehmoment des Antriebsmotors (12) reduziert, wenn Daten von einem Bremsensteuergerät (16) des Anhängefahrzeugs empfangen werden, aus denen sich ergibt, dass die Rückraumüberwachung aktiv ist und dass gebremst wird oder Bremslichter (18, 19) betätigt werden sollen.

## Claims

1. Method for influencing the control of a motor vehicle (10) having a drive engine (12) and at least one trailer vehicle (11), wherein the trailer vehicle (11) has an electronic brake system with monitoring of the area to the rear, wherein when an obstacle to rear is approached, a brake control unit (16) of the trailer vehicle (11) can activate brakes of the trailer vehicle (11) and can transmit a request for the activation of brake lights (18, 19) to the motor vehicle (10), **characterized in that** the control of the motor vehicle (10) reduces a torque of the drive engine (12) if the monitoring of the area to the rear of the trailer vehicle (11) is active and the trailer vehicle (11) is being braked or transmits a request for the activation of the brake lights (18, 19) to the motor vehicle (10).

2. Method according to Claim 1, **characterized in that** the control of the motor vehicle is carried out by an engine control unit (13) which receives data, from which the activity of monitoring of the area to the rear of the trailer vehicle (11) and the request for activation of the brake lights (18, 19) can be detected.

3. Engine control unit (13) for a drive engine (12) of a motor vehicle (10), having a data connection for receiving data which relate at least to the status of monitoring of the area to the rear and to activation of brakes, in particular for carrying out the method according to one of the preceding claims, **characterized in that** the engine control unit (13) reduces a torque of the drive engine (12) if data from which it is apparent that the monitoring of the area to the rear is active and that braking is being carried out or brakes lights (18, 19) are to be activated are received from a brake control unit (16) of the trailer vehicle.

## Revendications

1. Procédé pour influencer une commande d'une voiture motrice (10) comprenant un moteur de propulsion (12) et au moins un véhicule remorque (11), le véhicule remorque (11) possédant un système de freinage électronique avec surveillance de l'espace arrière, un contrôleur de frein (16) du véhicule remorque (11) pouvant actionner les freins du véhicule remorque (11) lors d'une approche dirigée en marche arrière d'un obstacle et pouvant envoyer à la voiture motrice (10) un ordre d'actionnement des feux-stop (18, 19), **caractérisé en ce que** la commande de la voiture motrice (10) réduit un couple du moteur de propulsion (12) lorsque la surveillance de l'espace arrière du véhicule remorque (11) est active et le véhicule remorque (11) est freiné ou envoie un ordre d'actionnement des feux-stop (18, 19) à la voiture motrice (10).

2. Procédé selon la revendication 1, **caractérisé en ce que** la commande de la voiture motrice est exécutée par un contrôleur de moteur (13) qui reçoit des données à partir desquelles peuvent être reconnus l'activité de la surveillance de l'espace arrière du véhicule remorque (11) et l'ordre d'actionnement des feux-stop (18, 19).

3. Contrôleur de moteur (13) pour un moteur de propulsion (12) d'une voiture motrice (10), comprenant une liaison de données servant à la réception de données qui concernent au moins l'état d'une surveillance de l'espace arrière et un actionnement de freins, notamment destiné à mettre en oeuvre le procédé selon l'une des revendications précédentes, **caractérisé en ce que** le contrôleur de moteur (13) réduit un couple du moteur de propulsion (12) lorsque des données sont reçues par un un contrôleur de frein (16) du véhicule remorque, desquelles il ressort que la surveillance de l'espace arrière est active et qu'un freinage est en cours ou que les feux-stop (18, 19) doivent être actionnés.
